# DEMANDE DE BREVET EUROPEEN

(11) **EP 3 964 981 A1**
(43) Date de publication de la demande: **09.03.2022**
(21) Numéro de dépôt: 20305992.8
(22) Date de dépôt: 08.09.2020
(51) Int. Cl.: G06F 16/957, G06Q 10/10

(54) **PROCÉDÉ D'OPTIMISATION DE L'ESPACE DE STOCKAGE D'UN SERVEUR DE MESSAGERIE ET SYSTÈME ASSOCIÉ**

(71) Demandeur: Atos Integration, 95870 Bezons (FR)
(72) Inventeur: TACHNOFF, Serge, 75012 PARIS (FR)
(74) Mandataire: Cabinet Camus Lebkiri

(57) **Abrégé**

Un aspect de l'invention concerne un procédé d'optimisation de l'espace de stockage d'un serveur de messagerie sur lequel un ensemble de messages électroniques (10) est stocké, comprenant :
- une étape d'identification d'au moins un élément redondant (30) présentant une pluralité d'occurrences (20) ;
- une étape de stockage de chaque élément redondant (30) ;
- une étape d'association de chaque l'élément redondant (30) à une position et à un message électronique (10) ;
- une étape de suppression des occurrences (20) pour obtenir un ensemble de message électronique (10) déconstruit ;
- à réception d'une requête de consultation d'un message électronique (10) :
o une étape de détermination des éléments redondants (30) ; et
o une étape d'ajout de chaque élément redondant (30) dans le message électronique (10) déconstruit, à la position correspondant au message électronique (10) original.

## Description

### DOMAINE TECHNIQUE DE L'INVENTION

La présente invention concerne les serveurs de messagerie électronique et notamment les procédés permettant d'optimiser l'espace de stockage de serveurs de messagerie électronique.

### ARRIÈRE-PLAN TECHNOLOGIQUE DE L'INVENTION

Un serveur de messagerie électronique arrive à plus ou moins long terme à une saturation mémoire de son espace de stockage stockant l'ensemble des messages électroniques ou courriels d'une boîte de messagerie électronique d'un utilisateur. Il est alors indispensable de réduire l'espace de stockage utilisé pour pouvoir stocker de nouveaux messages électroniques.

Des notifications, comme par exemple la notification ci-dessous, peuvent alors être envoyées à l'utilisateur, pour l'inviter à supprimer des éléments superflus de sa boîte de messagerie électronique :

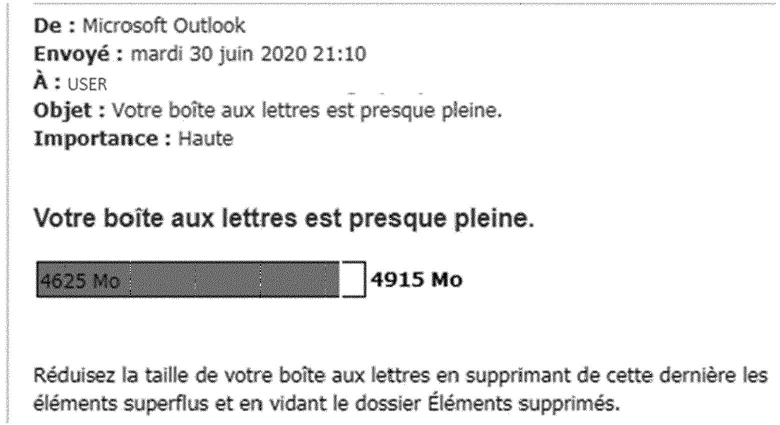

Toutefois, il peut être difficile d'identifier des éléments superflus et/ou le nombre d'éléments superflus supprimés peut être insuffisant pour réduire l'espace de stockage utilisé de façon satisfaisante.

Afin de remédier à la saturation de l'espace de stockage, il est connu d'avoir recours à des messageries instantanées pour limiter le nombre de courriels échangés. Toutefois, ces solutions ne sont pas systématiquement mises en œuvre, notamment dans le cas où le nombre d'échanges avec un destinataire donné est limité, ce qui est le cas des échanges externes pour lesquels les courriels sont favorisés. Ces solutions ne font alors que retarder le moment de la saturation.

Il existe également des solutions d'optimisation de l'espace de stockage d'un serveur, mettant par exemple en œuvre la compression de données. Cependant, en appliquant cette solution à un serveur de messagerie, l'expérience utilisateur serait altérée puisque l'utilisateur ne pourrait plus consulter aisément un message ayant été compressé ou réaliser une recherche sur un groupe de messages compressés.

Il existe donc un besoin d'optimiser l'espace de stockage d'un serveur de messagerie sans altérer l'expérience de l'utilisateur quand il consulte sa messagerie.

### RÉSUMÉ DE L'INVENTION

Pour cela, l'invention concerne un procédé d'optimisation de l'espace de stockage d'un serveur de messagerie sur lequel un ensemble de messages électroniques est stocké, l'espace de stockage présentant un taux de remplissage, chaque message électronique étant associé à un identifiant de message, le procédé comprenant :
- une étape d'identification d'au moins un élément redondant présentant une pluralité d'occurrences au sein d'au moins un sous-ensemble de messages électroniques de l'ensemble de messages électroniques, chaque occurrence étant associée à l'identifiant de message correspondant au message électronique dans lequel l'occurrence est localisée et à un identifiant de position correspondant à la position de l'occurrence dans le message électronique ;
- une étape de stockage de chaque élément redondant identifié et d'association d'un identifiant d'élément à chaque élément redondant stocké ;
- pour chaque élément redondant stocké :
   - une étape d'association de l'identifiant d'élément correspondant à l'identifiant de position et à l'identifiant de message associés à chaque occurrence de la pluralité d'occurrences correspondante ;
   - une étape de suppression de la pluralité d'occurrences correspondante dans chaque message électronique du sous-ensemble de messages électroniques pour obtenir un message électronique déconstruit pour chaque message électronique du sous-ensemble de messages électroniques ;
- à réception d'une requête de consultation d'un message électronique du sous-ensemble de messages électroniques :
   - une étape de détermination de chaque identifiant d'élément associé à l'identifiant de message correspondant au message électronique ;
   - une étape d'ajout de chaque élément redondant associé à un identifiant d'élément déterminé, à la position correspondant à l'identifiant de position associé dans le message électronique déconstruit correspondant pour obtenir un message électronique reconstruit.

Grâce au procédé, les messages électroniques déconstruits sont libérés des éléments redondants, réduisant le taux de remplissage de l'espace de stockage, ce qui induit une consommation moindre de ressources de fonctionnement.

Le procédé permet de reconstruire les messages électroniques déconstruits de manière identique aux originaux, n'altérant pas l'expérience utilisateur lorsqu'il consulte les messages.

Outre les caractéristiques qui viennent d'être évoquées dans le paragraphe précédent, le procédé peut présenter une ou plusieurs caractéristiques complémentaires parmi les suivantes, considérées individuellement ou selon toutes les combinaisons techniquement possibles :
- le procédé est déclenché lorsque le taux de remplissage atteint un seuil de déclenchement ;
- le procédé est déclenché par l'utilisateur ;
- le procédé est déclenché lors de la réception d'un nouveau message électronique ;
- l'exécution des étapes d'identification, de stockage, d'association et de suppression s'interrompt lorsque le taux de remplissage est inférieur ou égal à un seuil d'arrêt ;
- le sous-ensemble de messages électroniques est choisi pour que le taux de remplissage soit inférieur ou égal à un seuil d'arrêt à l'issue du procédé ;
- lors de l'étape de stockage, seul un nombre limité d'éléments redondants est stocké ;
- le procédé comprend une étape de sélection d'un sous-ensemble d'éléments redondants, le sous-ensemble étant sélectionné à partir des éléments redondants identifiés pour que le taux de remplissage soit inférieur ou égal à un seuil d'arrêt à l'issue du procédé ;
- chaque message électronique est associé à une taille mémoire et l'étape d'identification est réalisée par taille mémoire décroissante ;
- chaque message électronique a une taille supérieure à une taille limite ;
- chaque message électronique est sélectionné au sein d'un fil de discussion ;
- chaque élément redondant est une signature, une clause, un message environnemental, un message anti-virus ou un document en pièce jointe.

L'invention concerne en outre un système pour la mise en œuvre du procédé selon l'invention, le système comportant un serveur de messagerie configuré pour stocker un ensemble de messages électroniques.

Outre les caractéristiques qui viennent d'être évoquées dans le paragraphe précédent, le système peut présenter la caractéristique complémentaire suivante :
- le système comporte un module de calcul configuré pour stocker chaque élément redondant et chaque identifiant et/ou pour reconstruire un message électronique sur requête de l'utilisateur.

L'invention concerne également une produit-programme d'ordinateur comprenant des instructions qui, quand le programme est exécuté sur un ordinateur, conduisent celui-ci à mettre en œuvre les étapes du procédé selon l'invention.

L'invention et ses différentes applications seront mieux comprises à la lecture de la description qui suit et à l'examen des figures qui l'accompagnent.

### BRÈVE DESCRIPTION DES FIGURES

Les figures sont présentées à titre indicatif et nullement limitatif de l'invention.
[Fig. 1] est une vue schématique d'un premier mode de mise en œuvre d'un procédé selon l'invention.
[Fig. 2] est une vue schématique d'un ensemble de messages électroniques traité par le procédé selon l'invention.
[Fig. 3] est une vue schématique d'un premier mode de réalisation d'un système selon l'invention.
[Fig. 4] est une vue schématique d'un deuxième mode de réalisation du système selon l'invention.
[Fig. 5] est une vue schématique d'un troisième mode de réalisation du système selon l'invention.
[Fig. 6] est une vue schématique d'un deuxième mode de mise en œuvre du procédé selon l'invention.

### DESCRIPTION DÉTAILLÉE

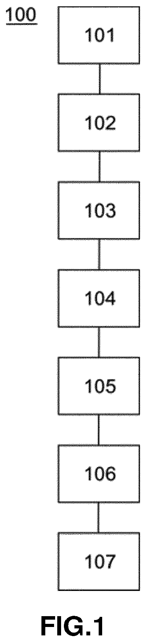

Un procédé 100 d'optimisation de l'espace de stockage 4 d'un serveur de messagerie 3 et un système 1 configuré pour mettre en œuvre ledit procédé 100 sont présentés en référence aux figures 1 à 6.

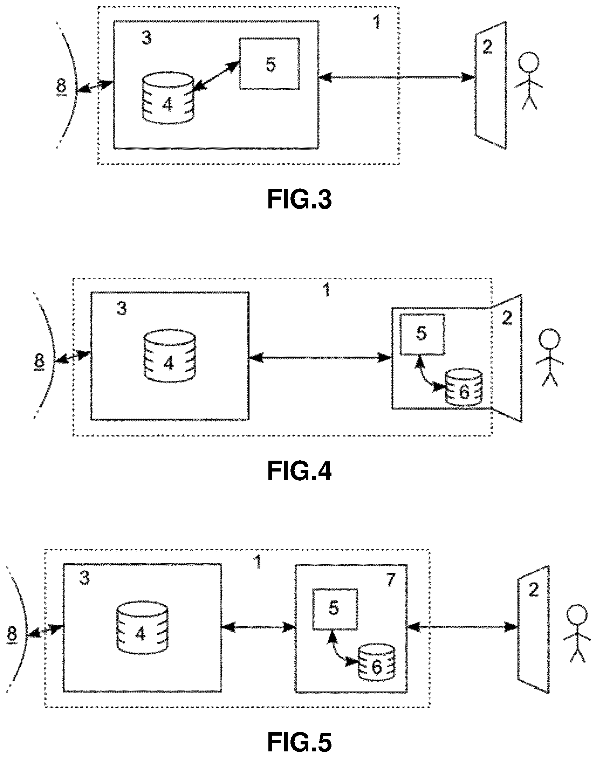

La figure 3 présente un premier mode de réalisation du système 1 configuré pour mettre en œuvre le procédé 100. Le système 1 comprend le serveur de messagerie 3. Le serveur de messagerie 3 fait l'interface entre un client de messagerie 2 et un réseau 8. Le réseau 8 peut être un réseau local ou un réseau Internet. Le réseau 8 peut implémenter par exemple un protocole de transfert de courrier tel que SMTP (Simple Mail Transfer Protocol en anglais). Le serveur de messagerie 3 est configuré pour stocker un ensemble de messages électroniques 10. Pour cela, il comprend un espace de stockage 4. Les messages électronique 10 sont reçus par le serveur de messagerie 3 et stockés sur l'espace de stockage 4. L'espace de stockage 4 présente un taux de remplissage, dépendant du nombre et de la taille des messages électroniques 10 stockés.

Selon le premier mode de réalisation, le serveur de messagerie 3 comprend également un processeur 5 permettant de réaliser des opérations sur les messages électroniques 10 stockés sur l'espace de stockage 4, par exemple pour en modifier le contenu ou supprimer un message électronique 10.

Usuellement, l'utilisateur du serveur de messagerie 3, ou destinataire, consulte les messages électroniques 10 stockés par l'intermédiaire du client de messagerie 2. Il peut ainsi, grâce au client de messagerie 2, consulter, modifier ou supprimer les messages électroniques 10 stockés.

Chaque message électronique 10 stocké sur l'espace de stockage 4 est associé à un identifiant de messages 41.

Un message électronique 10 peut être de type texte. Il comprend au moins un corps, préférentiellement un en-tête et peut également comprendre un ou plusieurs documents joints.

L'en-tête comprend par exemple les informations permettant l'acheminement du message électronique 10 au destinataire. Un exemple d'en-tête peut être le suivant :

```
 Received: from domainexp.com
  by mta.domainexp.com with HTTPS via
  secure.domainexp.com; Tue, 21 Sep 2020 12:49:18 +0000
 Received: by domaindest.com id 1A2B3C4D5E6F; Tue, 21 Sep
  2020 12:49:16 +0000
 Content-Type: application/ms-tnef; name="winmail.dat"
 Content-Transfer-Encoding: binary
 From: Jean
 To: François
 Subject: Bonjour !
 Thread-Topic: Bonjour !
 Message-ID:
 Content-Language: fr-FR
 MIME-Version: 1.0
```

L'en-tête comprend plusieurs champs permettant par exemple d'identifier l'expéditeur et le destinataire grâce à leurs adresses de messagerie, l'objet du message ou encore l'heure d'envoi. Les champs d'en-tête peuvent également comprendre des informations sur le type d'encodage utilisé (lié à la langue utilisée) permettant de décoder correctement le corps du message électronique. Les champs d'en-tête peuvent être partiellement masqués au destinataire du message électronique.

Le corps du message électronique comprend par exemple du texte tel que les informations à communiquer au destinataire. Un exemple de corps de message électronique est le suivant :

```
 Bonjour François,
 Pour réaliser une baguette de pain il faut de la farine, de l'eau, de
 la levure et du sel. Former une pâte à partir des ingrédients et cuire
 ladite pâte. Pour obtenir une mie aérée, la pâte est
 préférentiellement pétrie pendant 15 min. Pour obtenir une baguette
 croustillante, la pâte est préférentiellement cuite à 250 °C pendant
 20 min. Voir les références de pétrins et de fours en pièces jointes.
 Jean
 Artisan Boulanger
 1 place de l'épi
 Blés-sur-Champ
 Pour protéger la nature n'imprimez cet email que si c'est nécessaire.
 > From: "François"
 > To: jean@domaindexp.com
 > Subject: Recette de la baguette de pain
 > Date: Tue, 22 Sep 2012 09:27:13 +0200
 > Bonjour Jean,
 >
 > Je souhaite préparer quelques baguettes de pain mais je ne connais
 pas la recette. Pourriez-vous m'en faire part ? Et pouvez-vous
 également me donner quelques références vers du matériel nécessaire ?
 >
 > Merci d'avance,
 >
 > François
```

En dehors des informations transmises par le message électronique 10 (par exemple la recette de la baguette de pain), le corps du message électronique 10 peut également comprendre des éléments qui peuvent être ajoutés automatiquement avant l'envoi du message électronique, tels qu'une signature, une clause, un message d'avertissement ou un message environnemental. La signature de l'expéditeur comprend par exemple une adresse postale ou des coordonnées téléphoniques. Les clauses ou les messages d'avertissement/environnementaux peuvent par exemple rappeler des règles de confidentialité ou des gestes éco-responsables.

Le message électronique 10 peut également comporter un ou plusieurs documents joints, tels que des fichiers texte, des images, des fichiers binaires ou des fichiers compressés.

Lorsqu'un message électronique 10 fait partie d'un fil de discussion, il peut également comprendre une partie au moins d'un précédent message électronique 10 auquel il fait suite. La partie du précédent message électronique 10 comprend par exemple quelques champs extraits de l'en-tête du précédent message électronique 10, ainsi que tout ou partie du corps du précédent message électronique 10. Dans l'exemple ci-dessus, le destinataire (François), reçoit une réponse à une question qu'il a envoyé dans un premier message électronique 10 à un expéditeur (Jean). L'espace de stockage 4 du serveur de messagerie 3 du destinataire comprend donc le message électronique 10 envoyé plus tôt à l'expéditeur, repris en grande partie dans le message électronique 10 qu'a reçu le destinataire. Il existe donc, sur l'espace de stockage 4, au moins deux occurrences 20 d'une pluralité d'éléments redondants 30.

Les éléments redondants 30 comprennent ici des champs d'en-tête et l'intégralité du corps du premier message électronique 10. Le nombre d'éléments redondants 30 ainsi que le nombre d'occurrences 20 associées va probablement augmenter en fonction des échanges au sein du même fil de discussion entre le destinataire et l'expéditeur.

Si le destinataire a déjà reçu des messages électroniques 10 de la part de l'expéditeur, alors l'espace de stockage 4 peut également comprendre plusieurs messages électroniques 10 comprenant la signature de l'expéditeur ou le rappel des gestes éco-responsables.

La taille d'un message électronique 10 est définie comme l'espace de stockage nécessaire pour stocker ledit message électronique 10. Plus le corps du message électronique 10 comprend d'éléments tels que des signatures, des clauses, des parties de précédents messages électroniques 10 auxquels il fait suite, plus sa taille est importante. De la même manière, plus le message électronique 10 comprend de documents joints, plus sa taille est importante. Il en résulte un taux de remplissage de l'espace de stockage 4 plus élevé.

Le procédé 100 permet d'optimiser l'espace de stockage 4 du serveur de messagerie 3. Par optimisation de l'espace de stockage, on entend la réduction du taux de remplissage de l'espace de stockage 4.

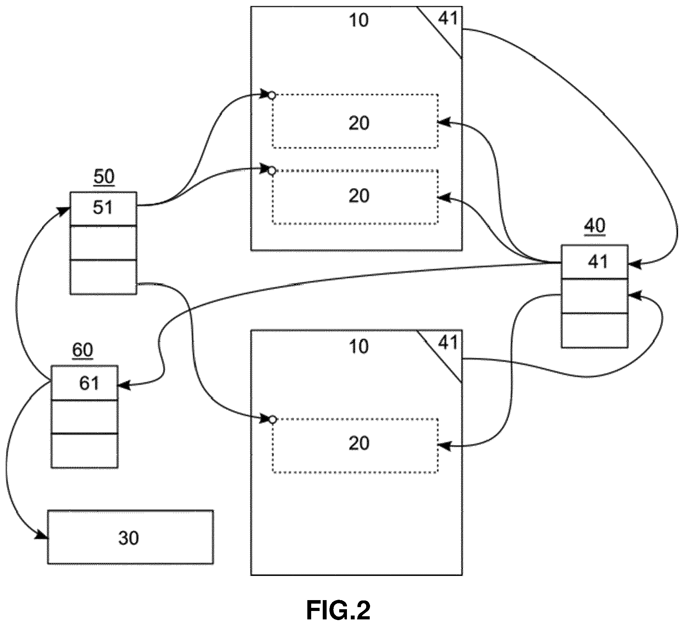

Le procédé 100 d'optimisation selon l'invention est décrit dans un premier temps en référence aux figures 1 et 2. Le procédé 100 comprend une étape d'identification 101 d'au moins un élément redondant 30 présentant une pluralité d'occurrences 20 au sein d'au moins un sous-ensemble de messages électroniques 10 de l'ensemble de messages électroniques 10 stockés sur l'espace de stockage 4. L'étape d'identification 101 permet également de déterminer la position de chaque occurrences 20 au sein de chaque message 10 du sous-ensemble de messages électroniques 10.

L'identification 101 peut être réalisée en comparant un sous-ensemble de messages électroniques 10 afin de déterminer des portions de messages communes entre les messages, formant les occurrences 20 des éléments redondants 30. Avantageusement, l'identification 101 met en œuvre un algorithme permettant de détecter les plus longues portions communes de messages. De cette manière, le procédé 100 permet de réduire fortement le taux de remplissage de l'espace de stockage 4. L'identification 101 non basée sur des éléments syntaxiques permet également de comparer des portions de messages électroniques 10 dont les éléments ne suivent pas un format usuel. Par exemple, le corps d'un message électronique 10 peut être mis en forme au moyen d'un langage de balisage non standard. L'identification 101 non basée sur des éléments syntaxiques permet également de déterminer la position de chaque occurrence au sein du sous-ensemble de messages électroniques 10.

Selon un mode de mise en œuvre du procédé 100, l'identification 101 peut être réalisée grâce à une analyse syntaxique de l'ensemble des messages électroniques 10 et une comparaison des éléments issues de l'analyse syntaxique.

L'analyse syntaxique permet de rechercher des mots clefs tels que "de", "à", "to", "from", "cc", "copie", "objet", et permet de déterminer la position de champs d'en-têtes dans chaque message électronique 10. Un champ d'en-tête peut faire partie du corps du message électronique 10. Les champs d'en-tête sont ensuite comparés deux à deux au sein du sous-ensemble de messages électroniques 10 comportant des champs d'en-tête, afin d'identifier les champs d'en-tête redondants 30, c'est-à-dire comprenant au moins deux occurrences. La liste de mots clefs ci-dessus est non exhaustive et fournie à titre d'exemple illustratif. Les mots clefs peuvent comprendre d'autres mots clefs ou la traduction des champs dans différentes langues.

La recherche de mots clefs tels que "rue", "impasse", "tel", "fax", "mobile", "web" ou leurs équivalents dans une ou plusieurs langues, permet de déterminer la position d'une signature dans chaque message électronique 10. Une comparaison entre les signatures de chaque message électronique 10 du sous-ensemble de messages électroniques 10 comprenant au moins une signature permet d'identifier les signatures redondantes.

La recherche de mots clefs tels "avertissement", "disclaimer", "message", "virus", "planète", "environnement", "confidentiel" ou leurs équivalents dans une ou plusieurs langues, permet de déterminer la position d'un message d'avertissement et/ou d'un message environnemental. Les messages d'avertissement/environnementaux sont ensuite comparés deux à deux au sein du sous-ensemble de messages électroniques 10 comportant lesdits messages d'avertissement/environnementaux, afin d'identifier les messages d'avertissement/environnementaux redondants 30.

L'identification 101 peut également comprendre la recherche d'éléments redondants 30 parmi les documents joints, aussi appelés pièces jointes ou fichiers joints, attachés aux messages électroniques 10. L'identification 101 peut comprendre la comparaison de documents joints entre eux ou la comparaison des métadonnées associées aux documents. Par exemple, lorsque les documents sont des fichiers texte, les contenus desdits documents peuvent être comparés directement. Que les documents joints soient binaires ou textuels, ils peuvent être comparés à partir de leurs empreintes numériques. L'empreinte numérique d'un document peut être obtenue par hachage, par exemple au moyen de l'algorithme MD5 (aussi appelé Message Digest 5 en anglais). Les documents joints peuvent également être comparé à partir de leurs métadonnées, telles que les noms de chaque fichier, les dates de création/modification ou les tailles.

Le ou les éléments redondants 30 issues de l'étape d'identification 101 peuvent ainsi comprendre des éléments, tels que :
- un portion de message commune ;
- un champ d'en-tête ;
- une signature ;
- un message d'avertissement/environnementaux ;
- un document joint ;
- un message de logiciel anti-virus.

La liste d'éléments redondants 30 présentée ici n'est pas exhaustive et peut comprendre d'autres types d'éléments.

Les documents joints peuvent présenter une taille très supérieure aux autres types d'éléments redondants 30. Ainsi, les multiples occurrences 20 d'un document stockées sur le serveur de messagerie 3 peuvent provoquer un fort taux de remplissage de l'espace de stockage 4. Ainsi, pour réduire efficacement le taux d'utilisation de l'espace de stockage 4, il peut être avantageux de privilégier une recherche d'éléments redondants 30 parmi les documents joints.

Les documents peuvent toutefois présenter une redondance moins élevée que les éléments textuels, tels que les champs d'en-tête ou les signatures. Même avec une taille faible, les multiples occurrences 20 d'un élément textuel stockées sur le serveur de messagerie 3 peuvent également provoquer un fort taux de remplissage de l'espace de stockage 4. Afin de réduire efficacement le taux d'utilisation de l'espace de stockage 4, il peut être avantageux de privilégier une recherche d'éléments redondants 30 parmi les éléments textuels, c'est à dire au sein des en-têtes ou des corps de messages électroniques 10.

Lors de l'étape d'identification 101, il peut être avantageux de sélectionner un type particulier d'éléments, tel que les éléments textuels ou les documents joints. De cette manière, seulement un type d'éléments redondants 30 est traité, permettant de réduire la durée d'exécution du procédé 100. Sélectionner l'un ou l'autre des types d'éléments permet toutefois d'obtenir une réduction du taux d'occupation satisfaisant.

L'étape d'identification 101 comprend également l'association de chaque occurrence 20 d'un élément redondant 30 à l'identifiant de message 41 au sein duquel l'occurrence 20 est localisée. Dans le mode de mise en œuvre de la figure 2, ladite association est stockée dans un tableau d'occurrences 40. Le tableau d'occurrences 40 peut être une table d'association.

Chaque occurrence 20 est également associée à un identifiant de position 51. L'identifiant de position 51 renvoie vers la position de l'occurrence 20 au sein du message électronique 10. Dans le mode de mise en œuvre de la figure 2, ladite association est stockée dans un tableau de positions 50. Le tableau de positions 50 peut également être une table d'association.

Le procédé 100 comprend une étape de stockage 102 de chaque élément redondant 30 identifié afin de pouvoir retrouver ces derniers lors de la consultation d'un message électronique 10. L'étape de stockage 102 comprend également l'association d'un identifiant d'élément 61 à chaque élément redondant 30 stocké. Dans le mode de mise en œuvre de la figure 2, les identifiants d'éléments 61 sont stockés dans un tableau d'éléments 60. Le tableau d'éléments 60 peut également être une table d'association.

Les éléments redondants 30 peuvent être stockés sur le serveur de messagerie 3, comme présenté par le mode de réalisation de la figure 3. Selon ce mode de réalisation, les éléments redondants 30 sont stockés sur l'espace de stockage 4 du serveur de messagerie 3. Selon ce même mode de réalisation, les tableaux d'occurrences 40, de positions 50 et d'éléments 60 sont également stockés sur le serveur de messagerie 3, par exemple sur l'espace de stockage 4.

Selon le mode de réalisation des figures 4 et 5, les éléments redondants 30 et/ou les tableaux d'occurrences 40, de positions 50 et d'éléments 60 peuvent être stockés sur un second espace de stockage 6 du système 1. Ce second espace de stockage 6 est préférentiellement distinct du serveur de messagerie 3. Ces modes de réalisation offrent l'avantage de ne pas nécessiter de modifications du serveur de messagerie 3 pour mettre en œuvre le procédé 100. Le second espace de stockage 6 peut être compris dans le client de messagerie 2 ou sur un module de calcul 7.

Les étapes du procédé 100 peuvent être mises en œuvre au moyen du processeur 5. Ce dernier 5 peut être compris au niveau du client de messagerie 2 ou au niveau du module de calcul 7 comme présenté dans les figures 4 et 5. De cette manière, le serveur de messagerie 3 n'a pas besoin d'être modifié pour mettre en œuvre le procédé 100. Selon le mode de réalisation de la figure 5, ni le serveur de messagerie 3, ni le client de messagerie 2 n'ont besoin d'être modifiés pour mettre en œuvre le procédé. Il suffit d'interfacer le module de calcul 7 entre le serveur de messagerie 3 et le client de messagerie 2 pour disposer des éléments permettant de mettre en œuvre le procédé 100.

Le procédé 100 comprend une étape d'association 103 et une étape de suppression 104 de chaque occurrence 20. Le procédé 100 permet ainsi de déconstruire chaque message électronique 10 du sous-ensemble de messages électroniques 10. Par message électronique 10 déconstruit, on entend un message électronique 10 libre de toutes les occurrences 20 des éléments redondants 30 stockés.

Lors de l'étape d'association 103, chaque identifiant d'élément 61 est associé à l'identifiant de position 51 de chaque occurrence 20 de l'élément redondant 30 auquel il se rapporte. Chaque identifiant d'élément 61 est également associé à chaque identifiant de message 41 au sein duquel ladite occurrence 20 est localisée. En d'autres termes, lorsqu'au moins une occurrence 20 d'au moins un élément redondant 30 est localisée dans un message électronique 10, l'identifiant de message 41 renvoie vers chaque identifiant d'élément 61, chaque identifiant d'élément 61 renvoyant à son tour vers chaque identifiant de position 51 de l'occurrence 20 associée.

Lors de l'étape de suppression 104, chaque occurrence 20 de chaque élément redondant 30 est supprimée du sous-ensemble de messages électroniques 10. On obtient ainsi le sous-ensemble de messages électroniques 10 déconstruits.

Chaque message électronique 10 déconstruit, libéré d'une ou plusieurs occurrences 20 d'éléments redondants 30, présente une taille moindre que le message électronique 10 original correspondant. Ainsi, le taux de remplissage du sous-ensemble de messages électroniques 10 déconstruits, stockés sur l'espace de stockage 4, est inférieur au taux de remplissage du sous-ensemble de messages électroniques 10 originaux correspondants.

Les éléments redondants 30 étant stockés au sein du système 1, il n'y a pas de perte d'information.

Selon le mode de réalisation du système 1, présenté par la figure 3, les éléments redondants 30 sont stockés sur le serveur de messagerie 3. En revanche, une seule occurrence de chaque élément redondant 30 est stockée sur le serveur de messagerie 3. Le taux de remplissage de l'espace de stockage 4 est donc réduit.

Selon les modes de réalisation du système 1 présentés par les figures 4 et 5, les éléments redondants 30 sont stockés hors du serveur de messagerie 3, réduisant davantage le taux de remplissage de l'espace de stockage 4, alors libéré de toutes les occurrences 20 des éléments redondants 30.

Nous appelons également étape de déconstruction l'ensemble des étapes d'identification 101, de stockage 102, d'association 103 et de suppression 104.

Le procédé 100 permet également de reconstruire un message électronique 10 déconstruit. Le procédé 100 est aisément transposable à la reconstruction d'une pluralité de messages électroniques 10 déconstruits.

La reconstruction d'un message électronique 10 déconstruit est réalisée lorsque l'utilisateur souhaite consulter le message électronique 10 dans sa forme originale. La reconstruction est déclenchée à la réception 105 d'une requête de consultation du message électronique 10. De cette manière, la reconstruction du message électronique n'a pas besoin d'être anticipée. Le taux de remplissage reste également réduit hors de la consultation d'un message électronique 10.

Pour cela, le procédé 100 comprend une étape de détermination 106 et une étape d'ajout 107.

En sélectionnant le message électronique 10, l'identifiant de message 41 associé est obtenu, par exemple, au moyen du tableau de messages 40. Lors de l'étape de détermination 106, chaque identifiant d'élément 61 associé à l'identifiant de message 41 est déterminé. La position à laquelle chaque élément redondant 30 doit être inséré peut être obtenue grâce à l'association entre l'identifiant d'élément 61 et chaque identifiant de position 51.

Lors de l'étape d'ajout 107, chaque élément redondant 30 associé à un identifiant d'élément 61 déterminé est ajouté au message électronique 10 déconstruit. Ainsi, le message électronique 10 est reconstruit en comprenant toutes les informations comprises dans le message électronique 10 original. De cette manière, le procédé 100 permet de conserver toutes les informations. Toutefois, afin de reconstruire le message électronique 10 identique à l'original, chaque élément redondant 30 est ajouté à la position correspondant à l'identifiant de position 51 associé. Ainsi, le message électronique 10 reconstruit correspond au message électronique 10 original. La déconstruction et la reconstruction sont réalisées de manière transparente pour l'utilisateur.

Selon une alternative au procédé 100, permettant d'éviter le recours aux tableaux d'occurrences 40 et de positions 50, chaque identifiant d'élément 61 peut être inséré dans le message électronique 10 lors de l'étape de suppression 104, en lieu et place de chaque occurrence 20 de l'élément auquel il est associé. Ainsi, l'étape de détermination 106 peut être réalisée au moyen d'une analyse syntaxique du message électronique 10. Selon cette alternative, l'étape d'ajout 107 comprend alors également la suppression de chaque identifiant d'élément 61 du message électronique 10 lorsque l'élément redondant 30 a été ajouté.

Le procédé 100 peut être déclenché automatiquement. Par exemple, lorsque le taux de remplissage de l'espace de stockage 4 atteint un seuil de déclenchement. Le seuil de déclenchement peut par exemple être égale à 90 %. Le seuil de déclenchement peut être paramétrable, c'est-à-dire réglable par l'utilisateur. Le déclenchement du procédé 100 peut également être réalisé par l'utilisateur, afin qu'il puisse, par exemple, forcer la déconstruction 101, 102, 103, 104 des messages électroniques 10 lorsqu'il n'utilise pas les ressources numériques du système 1. Afin de minimiser l'utilisation des ressources numériques du système 1, le procédé 100 peut être déclenché automatiquement à la réception d'un nouveau message électronique 100.

Avantageusement, les étapes de déconstruction 101, 102, 103, 104 peuvent être réalisées par lots et éventuellement pendant les périodes de faible activité telles que la nuit ou les jours fériés.

Le procédé 100 peut réaliser les étapes de déconstruction 101, 102, 103, 104 des messages électroniques 10 jusqu'à ce que le taux de remplissage atteigne un seuil d'arrêt. Le seuil d'arrêt est préférentiellement inférieur au seuil de déclenchement et peut par exemple être de 80 %. Le seuil d'arrêt peut être paramétrable. Par exemple, les éléments redondants 30 peuvent être en premier lieu recherchés parmi les documents joints, permettant d'identifier un sous-ensemble de messages électroniques 10 à traiter. Les étapes de déconstruction 101, 102, 103, 104 permettent ainsi de réduire le taux de remplissage jusqu'à un premier taux. Si le premier taux est supérieur au seuil d'arrêt, alors de nouveaux éléments redondants 30 peuvent être recherchés parmi les éléments textuels tels que les signatures, permettant d'étendre davantage le sous-ensemble de messages électroniques 10 à déconstruire. Les étapes de déconstruction 101, 102, 103, 104 permettent ainsi de réduire encore le taux de remplissage jusqu'à ce que qu'il soit inférieur ou égal au seuil d'arrêt.

Par exemple, une première identification 101 d'éléments redondants 30 parmi les documents a permis d'identifier 18 documents redondants. La déconstruction 101, 102, 103, 104 a permis de réduire le taux de remplissage de 90 % à 80,4 %. Une seconde identification 101 d'éléments redondants 30 parmi les éléments textuels a permis d'identifier 20 signatures redondantes et 18 messages d'avertissement redondants. La déconstruction 101, 102, 103, 104 a permis de réduire le taux de remplissage de 0.4 % pour atteindre le taux seuil de 80 %.

Même en réduisant le taux de remplissage par la suppression de toutes les occurrences 20 des éléments redondants 30, le taux de remplissage de l'espace de stockage 4 peut arriver à saturation. Lorsque l'espace de stockage 4 est saturé (taux de remplissage de 100 %), il est nécessaire de supprimer une partie des messages électroniques 10 déjà stockés sur le serveur de messagerie 3 afin de pouvoir en stocker de nouveaux. Afin de retarder l'instant où des messages électroniques 10 sont supprimés, l'identification 101 d'éléments redondants 30 est avantageusement réalisée en prenant en compte tous les types d'éléments, qu'il s'agisse de documents ou d'éléments textuels. Ainsi, la réduction du taux de remplissage est la plus forte.

Une réduction moindre du taux de remplissage peut être suffisante et permet notamment de réduire le temps d'exécution du procédé 100. Pour cela, l'ensemble des messages électroniques 10 au sein duquel l'identification 101 d'éléments redondants 30 est réalisée peut comprendre une partie seulement de l'ensemble de messages électroniques 10 non déconstruits stockés sur le serveur de messagerie 3, appelé précédemment sous-ensemble de messages électroniques 10.

Les messages électroniques 10 comprenant un ou plusieurs éléments redondants 30 peuvent présenter une taille supérieure aux messages électroniques ne comprenant pas d'élément redondant 30. Ainsi, l'ensemble des messages électroniques 10 au sein duquel l'identification 101 est réalisée peut préférentiellement comprendre des messages électroniques 10 non déconstruits dont la taille est supérieure à une taille limite. De la sorte, le procédé 100 traite les messages électroniques 10 présentant une forte chance de comporter des éléments redondants 30, voire des éléments redondants 30 de taille importante, comme des documents, sans traiter tous les messages électroniques 10 stockés sur le serveur de messagerie 3. Ainsi, la réduction du taux de remplissage est efficace tout en réduisant le temps d'exécution du procédé 100.

Selon une alternative, chaque message électronique 10 est associé à une taille et l'étape d'identification 101 est réalisée par taille décroissante. Ainsi les messages électroniques 10 de taille importante sont traités en premier, permettant de réduire rapidement le taux de remplissage, tout en traitant tous les messages électroniques 10.

Les messages électroniques 10 compris dans un fil de discussion présentent une chance élevée de comporter des éléments redondants 30 tels que l'objet du fil de discussion ou une signature d'un des expéditeurs. Afin de réduire le temps d'identification 101 et le nombre de messages électroniques 10 à traiter, les messages électroniques 10 non déconstruits sont préférentiellement sélectionnés au sein d'un fil de discussion.

Avantageusement, lors de l'étape de stockage 102, seul un nombre limité d'éléments redondants 30 est stocké et associé à un identifiant d'éléments 61. Ainsi, les éléments redondants 30 stockés comprennent aléatoirement des éléments redondants 30 présentant une taille importante et/ou une redondance élevée. Le procédé 100 réduit le taux de remplissage en supprimant les occurrences d'éléments redondants 30 de taille importante et/ou de forte redondance. Le nombre limité présente l'avantage de réduire le nombre d'éléments redondants 30 traités et donc la durée d'exécution du procédé 100. Le nombre limité peut être paramétrable.

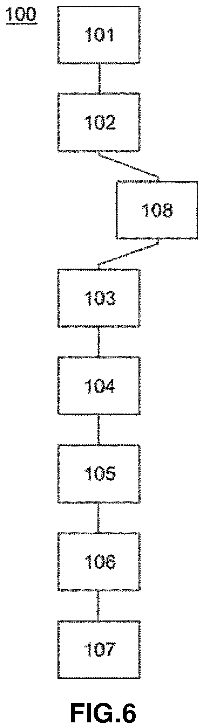

Afin de réduire suffisamment le taux de remplissage tout en réduisant le temps d'exécution du procédé 100, une alternative du procédé 100, illustrée par la figure 6, comprend une étape de sélection 108 d'un sous-ensemble d'éléments redondants 30 à partir des éléments redondants 30 identifiés lors de l'étape d'identification 101. Lors de l'étape de sélection 108, toutes les occurrences 20 des éléments redondants 30 sont identifiées et associées à une taille. Une pluralité de sous-ensemble aléatoires d'éléments redondants 30 est formée et une estimation de la réduction de taux de remplissage est calculée pour chaque sous-ensemble. Le sous-ensemble retenu permet d'atteindre le seuil d'arrêt. Avantageusement, le sous-ensemble retenu permet d'atteindre le seuil d'arrêt en minimisant le nombre d'éléments redondants 30 à traiter et donc le temps d'exécution du procédé 100.

Selon l'alternative de la figure 6, l'étape de stockage 102 stocke chaque élément redondant 30 du sous-ensemble d'éléments redondants 30 retenu lors de l'étape de sélection 108.

Par exemple, le sous-ensemble d'éléments redondants 30 issu de l'étape de sélection comprend 1021 signatures redondantes, 822 messages d'avertissement et 9 documents joints. La déconstruction 101, 102, 103, 104 a permis de réduire le taux de remplissage de 90 % à 80 %.

## Revendications

1. Procédé (100) d'optimisation de l'espace de stockage (4) d'un serveur de messagerie (3) sur lequel un ensemble de messages électroniques (10) est stocké, l'espace de stockage (4) présentant un taux de remplissage, chaque message électronique (10) étant associé à un identifiant de message (41), le procédé étant **caractérisé en ce qu'**il comprend :
- une étape d'identification (101) d'au moins un élément redondant (30) présentant une pluralité d'occurrences (20) au sein d'au moins un sous-ensemble de messages électroniques (10) de l'ensemble de messages électroniques, chaque occurrence (20) étant associée à l'identifiant de message (41) correspondant au message électronique (10) dans lequel l'occurrence (20) est localisée et à un identifiant de position (51) correspondant à la position de l'occurrence (20) dans le message électronique (10) ;
- une étape de stockage (102) de chaque élément redondant (30) identifié et d'association d'un identifiant d'élément (61) à chaque élément redondant (30) stocké ;
- pour chaque élément redondant (30) stocké :
∘ une étape d'association (103) de l'identifiant d'élément (61) correspondant à l'identifiant de position (51) et à l'identifiant de message (41) associés à chaque occurrence (20) de la pluralité d'occurrences (20) correspondante ;
∘ une étape de suppression (104) de la pluralité d'occurrences (20) correspondante dans chaque message électronique (10) du sous-ensemble de messages électroniques (10) pour obtenir un message électronique (10) déconstruit pour chaque message électronique (10) du sous-ensemble de messages électroniques (10) ;
- à réception (105) d'une requête de consultation d'un message électronique (10) du sous-ensemble de messages électroniques (10) :
∘ une étape de détermination (106) de chaque identifiant d'élément (61) associé à l'identifiant de message (41) correspondant au message électronique (10) ;
∘ une étape d'ajout (107) de chaque élément redondant (30) associé à un identifiant d'élément (61) déterminé, à la position correspondant à l'identifiant de position (51) associé dans le message électronique (10) déconstruit correspondant, pour obtenir un message électronique (10) reconstruit.

2. Procédé (100) selon la revendication 1, **caractérisé en ce qu'**il est déclenché lorsque le taux de remplissage atteint un seuil de déclenchement.

3. Procédé (100) selon la revendication 1, **caractérisé en ce qu'**il est déclenché par l'utilisateur.

4. Procédé (100) selon la revendication 1, **caractérisé en ce qu'**il est déclenché lors de la réception d'un nouveau message électronique (10).

5. Procédé (101) selon l'une quelconque des revendications précédentes, **caractérisé en ce que** le sous-ensemble de messages électroniques (10) est choisi pour que le taux de remplissage soit inférieur ou égal à un seuil d'arrêt à l'issue du procédé (100).

6. Procédé (100) selon l'une quelconque des revendications précédentes, **caractérisé en ce que** chaque message électronique (10) est associé à une taille mémoire et l'étape d'identification (101) est réalisée par taille mémoire décroissante.

7. Procédé (100) selon l'une quelconque des revendications précédentes, **caractérisé en ce que** chaque élément redondant (30) est une signature, une clause, un message environnemental, un message anti-virus ou un document en pièce jointe.

8. Système (1) pour la mise en œuvre du procédé (100) selon l'une quelconque des revendications précédentes, **caractérisé en ce qu'**il comporte un serveur de messagerie (3) configuré pour stocker un ensemble de messages électroniques (10).

9. Système (1) selon la revendication 8, **caractérisé en ce qu'**il comporte en outre un module de calcul (7) configuré pour stocker chaque élément redondant (30) et chaque identifiant (41, 51, 61) et/ou pour reconstruire un message électronique (10) sur requête de l'utilisateur.

10. Produit-programme d'ordinateur comprenant des instructions qui, quand le programme est exécuté sur un ordinateur, conduisent celui-ci à mettre en œuvre les étapes du procédé (100) selon l'une quelconque des revendications 1 à 7.
